Europäisches Patentamt

European Patent Office

Office européen des brevets

(11) Numéro de publication: **0 312 651**
A1

# (12) DEMANDE DE BREVET EUROPEEN

(21) Numéro de dépôt: 87201995.5

(22) Date de dépôt: **19.10.87**

(51) Int. Cl.4: **A23L 1/212 , A23L 1/214**

(43) Date de publication de la demande:
**26.04.89 Bulletin 89/17**

(84) Etats contractants désignés:
**FR**

(71) Demandeur: **SOCIETE DES PRODUITS NESTLE S.A.**
**Case postale 353**
**CH-1800 Vevey(CH)**

(72) Inventeur: **Bussiere, Michel**
**3, Allée des Fresnes**
**F-60000 Beauvais(FR)**
Inventeur: **Guillemain, Bernard**
**76, Allée de la Madeleine**
**F-60000 Beauvais(FR)**

(54) **Flocons de féculent.**

(57) Flocons consistant en des fragments d'un film obtenu par séchage sur cylindre d'une purée de tubercules d'igname, de bananes plantain et/ou de racines de manioc cuites. Le film présente un poids de 1,0 - 1,7 g/dm². La plus grande partie des flocons présente des dimensions comprises entre 0,3 et 3 mm. Leur densité apparente est de 350 - 550 g/l. Ils se laissent reconstituer par mélange avec de l'eau tiède, à raison d'un volume de flocons pour un volume d'eau. Un simple pétrissage de ce mélange pâteux avec la paume de la main permet de lui conférer l'aspect lisse et la texture élastique du foutou traditionnel.

EP 0 312 651 A1

# Flocons de féculent

La présente invention a pour objet des flocons de féculent consistant en des fragments d'un film obtenu par séchage sur cylindre d'une purée de féculent cuit.

La présente invention a également pour objet un procédé de fabrication de flocons de féculent, dans lequel on nettoie des tubercules, fruits et/ou racines de féculent, on les pare, on les pèle, on les découpe, on les cuit, on les réduit en purée, on sèche la purée sur cylindre, on détache du cylindre un film de purée séchée et on le réduit en fragments.

L'igname joue un rôle important dans l'alimentation des populations indigènes d'Afrique notamment. Dans le mets populaire appelé localement "foutou" ou "iyan", l'igname est consommée fraîche après avoir été cuite et longuement pilée.

Cependant, l'igname est une plante saisonnière dont les tissus et l'amidon se dégradent vite à l'entreposage. C'est ainsi qu'un autre mets populaire appelé localement "amala", consistant en une farine d'igname reconstituée dans l'eau bouillante, permet d'étendre la consommation de ces tubercules sur une plus grande partie de l'année. Or, le procédé traditionnel de fabrication artisanale de cette farine ne tire pas efficacement parti de la tubercule, il entraîne de grosses pertes de matière première et la texture du produit reconstitué est trop gommeuse.

C'est pourquoi divers chercheurs ont tenté et décrit l'adaptation des technologies récentes de fabrication de flocons de pommes de terre à la fabrication de flocons d'igname qui permettraient la préparation rapide ou instantanée de mets analogues au foutou par reconstitution avec de l'eau chaude et travail éventuel au pilon ou pétrissage à la main. Cette adaptation s'est heurtée à des problèmes de texture collante rencontrés soit à la fabrication, notamment au séchage, soit à la reconstitution.

Cependant, un produit récent qui permet d'éviter ces problèmes tout en assurant une reconstitution aisée est décrit dans le brevet européen EP 141977. Ce brevet propose un pain de féculent sec, notamment d'igname, de banane plantain et/ou de manioc, en sachet perméable à l'eau. Le sachet est rempli aux trois quart environ de son volume de granulés de flocons de féculent compactés. Pour reconstituer le pain, on plonge le sachet dans l'eau froide, on porte à ébullition, on laisse frémir une quinzaine de minutes et l'on sort le pain du sachet. Le pain reconstitué présente la forme du sachet gonflé. Il a un aspect lisse à l'extérieur et à la découpe. Sa consistance est élastique, autrement dit souple et tendre comme celle du foutou traditionnel.

Néanmoins, le procédé de fabrication de ce pain de féculent sec en sachet perméable à l'eau décrit dans ce brevet EP 141977 est relativement compliqué. Par rapport à un procédé de fabrication de flocons par séchage d'une purée de féculent sur cylindre, il comprend en effet une étape additionnelle essentielle de compactage des flocons, une étape supplémentaire de granulation et un remplissage en sachets perméables à l'eau.

Le but de la présente invention est de proposer des flocons de féculent, notamment d'igname, de banane plantain et/ou de manioc, qui puissent être reconstitués également de manière aisée sous forme d'un produit semblable au foutou traditionnel, mais dont la fabrication soit nettement plus simple que celle du pain de féculent sec ci-dessus.

A cet effet, les flocons de féculent selon la présente invention sont caractérisés par le fait qu'ils consistent en des fragments d'un film présentant un poids de 1,0 - 1,7 g/dm², les 80% d'entre eux présentent des dimensions comprises entre 0,3 et 3 mm, et ils présentent une densité apparente de 350 - 550 g/l.

De même, le procédé de fabrication de flocons de féculent selon la présente invention est caractérisé par le fait que l'on sèche la purée sur cylindre de manière que le film de purée séchée présente un poids de 1,0 - 1,7 g/dm², et l'on réduit le film détaché du cylindre en fragments ou flocons dont les 80% présentent des dimensions comprises entre 0,3 et 3 mm et dont la densité apparente soit de 350 - 550 g/l.

De préférence, ledit féculent est l'igname. Cependant, en dehors de la saison de l'igname, la banane plantain et/ou le manioc peuvent avantageusement le remplacer.

On a constaté en effet que des flocons répondant aux caractéristiques ci-dessus permettent une préparation particulièrement aisée d'un produit semblable au foutou traditionnel. Les flocons peuvent notamment être reconstitués par mélange avec de l'eau tiède à raison d'un volume de flocons pour un volume d'eau. La reconstitution ne pose donc pas le moindre problème de dosage quel que soit le récipient utilisé. En outre, une texture élastique semblable à celle du foutou traditionnel peut être aisément obtenue par simple pétrissage dudit mélange de flocons et d'eau tiède avec la paume de la main p.ex.

Le procédé de fabrication de ces flocons est beaucoup plus simple à mettre en oeuvre que le procédé de fabrication du pain de féculent sec ci-dessus et il ne souffre pas des défauts du type problèmes de texture collante rencontrés dans l'état de la technique antérieur. On peut supposer que ces défauts sont surmontés grâce au poids relativement important du film produit sur le cylindre de séchage. Ce poids relativement important, de même qu'une granulométrie précise quoique simple à obtenir, ainsi qu'une densité apparente relativement élevée aussi sont donc les éléments essentiels qui, de manière surprenante, suffisent à réaliser l'objectif visé par la présente invention.

Les flocons selon la présente invention consistent donc en des fragments d'un film de purée de féculent séchée sur cylindre présentant un poids de 1,0 - 1,7 g/dm². La plus grande partie d'entre eux présente des dimensions comprises entre 0,3 et 3 mm et leur densité apparente est de 350 - 550 g/l. Si ces caractéristiques ne sont pas respectées, à savoir si le poids du film est inférieur à 1,0 g/dm² ou supérieur à 1,7 g/dm², et/ou si une trop forte proportion des flocons présente des dimensions inférieures à 0,3 mm ou supérieures à 3 mm, et/ou si la densité apparente des flocons est inférieure à 350 g/l ou supérieure à 550 g/l, il n'est plus possible de reconstituer les flocons de manière aussi simple et l'on peut craindre l'apparition de problèmes de texture collante.

Pour mettre en oeuvre le présent procédé, on peut partir de préférence de tubercules d'igname fraîches de toute provenance. Ces tubercules fraîches présentent généralement une teneur en matière sèche relativement élevée de environ 32 - 35%. On peut rencontrer des valeurs extrêmes aussi basses que environ 28% ou aussi hautes que environ 42%. Le présent procédé peut être mis en oeuvre sans problème avec toutes ces tubercules, y compris celles qui présentent la plus faible teneur en matière sèche et qui sont les plus difficiles à traiter par les procédés traditionnels.

Le présent procédé peut également être mis en oeuvre à partir de bananes plantain et/ou de racines de manioc qui seules ou en mélange forment un substitut recommandable et adéquat de l'igname, en dehors de sa saison.

Les opérations de nettoyage, parage, pelage, découpage sont bien connues de l'homme du métier et ne posent pas de problème particulier. On préfère cependant le pelage à la vapeur plutôt qu'à la colle. De préférence également, après avoir éventuellement prédécoupé les tubercules, fruits ou racines en morceaux de la taille d'une grosse pomme de terre p.ex., on les pèle et on les découpe ensuite en tranches de 1 - 2 cm d'épaisseur.

Après les avoir pelées et découpées, on peut cuire les tubercules, fruits ou racines dans l'eau bouillante ou à la vapeur p.ex. Dans un mode de réalisation préféré du présent procédé on cuit les tubercules, fruits ou racines à la vapeur à pression atmosphérique durant 25 à 50 min. On peut réaliser cette cuisson en continu p.ex. dans un cuiseur à bande de transport ajourée sur laquelle les tranches sont disposées en une couche relativement peu épaisse de environ 5 - 20 cm p.ex., de manière à assurer l'homogénéité du traitement à la vapeur.

On peut réduire les tubercules, fruits ou racines cuites en purée à l'aide p.ex. d'un presse purée traditionnel dans lequel les morceaux cuits sont pressés au travers d'une plaque percée de trous ou de fentes. On peut les presser p.ex. à l'aide d'une vis d'archimède au travers d'une plaque percée de trous de environ 5 - 10 mm de diamètre ou de fentes de environ 8 mm de longueur présentant une ouverture totale de environ 40 - 60%.

On peut ensuite sécher cette purée sur cylindre en la disposant dans le bourbier d'un séchoir traditionnel à deux cylindres ou dans le bac de distribution d'un séchoir traditionnel à un cylindre équipé de plusieurs satellites. On peut recommander l'usage d'un séchoir à un cylindre équipé de quatre ou cinq satellites qui facilitent le dépôt d'un film de purée suffisamment épais sur le cylindre. Dans un mode de réalisation préféré du présent procédé particulièrement apte à conférer au film et aux flocons les propriétés visées, on sèche la purée sur un cylindre tournant à une vitesse de 2 - 6 tours/min et chauffé par de la vapeur à 3 - 10 bar, jusqu'à une teneur en humidité résiduelle de 4 -15%.

Le film sec détaché du cylindre par un couteau racleur peut ensuite être réduit en fragments ou flocons à l'aide d'un moulin à marteaux équipé d'une grille suffisamment fine, ou en le brisant en morceaux que l'on fait passer au travers d'une grille à l'aide de brosses tournantes p.ex. C'est ainsi que, dans un mode de réalisation préféré du présent procédé, on réduit le film en fragments ou flocons en le faisant passer à travers une grille à mailles de 0,5 - 3 mm d'ouverture.

Les exemples ci-après sont présentés à titre d'illustration du produit et du procédé selon la présente invention. Les pourcentages y sont donnés en poids.

## Exemple 1

On part d'un mélange de variétés d'igname de l'espèce Dioscorea rotundata de Côte d'Ivoire. Le mélange est composé de tubercules fraîches des variétés Kponan (20%), Sopéré Assawa (50)%, Krenglé (15%) et Gnan (15%).

On nettoie les tubercules, on les pare, on les découpe en morceaux de la taille d'une grosse pomme de terre, on les pèle à la vapeur et on les découpe en tranches de 1 - 1,2 cm d'épaisseur.

On cuit les tranches à la vapeur à pression atmosphérique à 100°C durant 40 min dans un cuiseur à bande de transport ajourée sur laquelle les tranches sont disposées en une couche de environ 13 cm d'épaisseur. On réduit les tranches cuites en purée à l'aide d'un presse purée. A cette purée, qui présente une teneur en matière sèche de environ 33%, on ajoute 0,05% de $Na_2S_2O_5$ et 0,1% de pyrophosphate acide de sodium.

On sèche la purée sur un cylindre de 1,25 m de diamètre et 5,5 m de largeur tournant à 2 tours/min. Le tambour est chauffé de l'intérieur avec de la vapeur d'eau à 4 bar. Il est muni de cinq satellites répartis à intervalles de 30° et il présente une surface effective de séchage de 17 $m^2$ entre le bac de distribution de la purée et le couteau qui détache le film de purée séchée. Ce film présente un poids de 1,5 g/$dm^2$ et une humidité résiduelle de 6 - 7%.

On réduit le film en flocons en le brisant et en faisant passer les bris au travers d'un tamis à mailles de 2 mm d'ouverture à l'aide de brosses tournantes. On obtient des flocons dont plus de 80% ont des dimensions comprises entre 0,3 et 2,0 mm et qui présentent une densité apparente de 448 g/l.

Pour reconstituer les flocons, on ajoute à un volume d'eau tiède (35°C) un même volume de flocons. On mélange avec une fourchette de manière que tous les flocons soient bien recouverts d'eau. On laisse reposer une minute. On obtient une pâte à laquelle on confère aisément, en la pétrissant avec la paume de la main, l'aspect lisse et la texture élastique du foutou traditionnel.

Exemple 2

On procède de la manière décrite à l'exemple 1, à l'exception des faits suivants :

On part de tubercules d'igname fraîches de la variété Kponan (au lieu d'un mélange de variétés) de Côte d'Ivoire, qui présentent une teneur en matière sèche de environ 35%.

On cuit les tranches à la vapeur à pression atmosphérique durant 30 min à 98°C (au lieu de 40 min à 100°C).

On sèche la purée sur le cylindre tournant à 3,8 tours/min (au lieu de 2 tours/min) et chauffé par de la vapeur à 8 bar (au lieu de 4 bar).

Le film détaché du cylindre présente un poids de 1,7 g/$dm^2$. On le réduit en flocons en le brisant et en faisant passer les bris au travers d'un tamis à mailles de 1,0 mm d'ouverture (au lieu de 2,0 mm).

On obtient des flocons dont plus de 80% ont des dimensions comprises entre 0,3 et 1,0 mm. Ils présentent une densité apparente de 500 g/l et l'on peut aussi les reconstituer aisément de la manière décrite à l'exemple 1.

Exemple 3

On procède de la manière décrite à l'exemple 1, à l'exception des faits suivants :

On part de tubercules d'igname fraîches de la variété Krenglé (au lieu d'une mélange de variétés) de Côte d'Ivoire, qui présentent une teneur en matière sèche de environ 35%.

On sèche la purée sur le cylindre muni de quatre satellites (au lieu de cinq) tournant à 2,5 tours/min (au lieu de 2 tours/min) et chauffé par de la vapeur à 5,5 bar (au lieu de 4 bar).

Le film détaché du cylindre présente un poids de 1,1 g/$dm^2$. On le réduit en flocons en le brisant et en faisant passer les bris au travers d'un tamis à mailles de 1,0 mm d'ouverture (au lieu de 2,0 mm).

On obtient des flocons dont plus de 80% ont des dimensions comprises entre 0,3 et 1,0 mm. Ils présentent une densité apparente de 388 g/l et l'on peut aussi les reconstituer aisément de la manière décrite à l'exemple 1.

**Revendications**

1. Flocons de féculent, consistant en des fragments d'un film obtenu par séchage sur cylindre d'une purée de féculent cuit, caractérisés par le fait qu'ils consistent en des fragments d'un film présentant un poids de 1,0 - 1,7 g/$dm^2$, les 80% d'entre eux présentent des dimensions comprises entre 0,3 et 3 mm, et ils présentent une densité apparente de 350 - 550 g/l.

2. Flocons de féculent selon la revendication 1, caractérisés par le fait qu'ils peuvent être reconstitués par mélange avec de l'eau tiède à raison d'un volume de flocons pour un volume d'eau.

3. Flocons de féculent selon l'une des revendications 1 et 2, caractérisés par le fait que le féculent est l'igname.

4. Flocons de féculent selon l'une des revendications 1 et 2, caractérisés par le fait que le féculent est la banane plantain et/ou le manioc.

5. Procédé de fabrication de flocons de féculent, dans lequel on nettoie des tubercules, fruits et/ou racines de féculent, on les pare, on les pèle, on les découpe, on les cuit, on les réduit en purée, on sèche la purée sur cylindre, on détache du cylindre un film de purée séchée et on le réduit en fragments, caractérisé par le fait que l'on sèche la purée sur cylindre de manière que le film de purée séchée présente un poids de 1,0 - 1,7 g/$dm^2$, et l'on réduit le film détaché du cylindre en fragments ou flocons dont les 80% présentent des dimensions comprises entre 0,3 et 3 mm et dont la densité apparente soit de 350 - 550 g/l.

6. Procédé selon revendication 5, caractérisé par le fait qu'après les avoir pelées et découpées, on cuit les tubercules, fruits et/ou racines à la vapeur à pression atmosphérique durant 25 - 50 min.

7. Procédé selon revendication 5, caractérisé par le fait que l'on sèche la purée sur un cylindre tournant à une vitesse de 2 - 6 tours/min et chauffé par de la vapeur à 3 - 10 bar, jusqu'à une teneur en humidité résiduelle de 4 - 15%.

8. Procédé selon revendication 5, caractérisé par le fait que l'on réduit le film en fragments ou flocons en le faisant passer à travers une grille à mailles de 0,5 - 3 mm d'ouverture.

9. Procédé selon l'une des revendications 5-8, caractérisé par le fait que le féculent est l'igname.

10. Procédé selon l'une des revendications 5-8, caractérisé par le fait que le féculent est la banane plantain et/ou le manioc.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | EP-A-0 141 977 (SOCIETE DES PRODUITS NESTLE S.A.) <br> * Revendications 1-7; exemple 1 * <br> --- | 1,3-7,9 ,10 | A 23 L 1/212 <br> A 23 L 1/214 |
| A | FR-A-1 395 654 (SEDIAC) <br> * Résumé; page 1, colonne 2, paragraphes 1-4; page 2, paragraphe 1 * <br> --- | 1-5,8- 10 | |
| A | FR-A-1 408 717 (SEDIAC) <br> * Résumé; page 1, colonne 1, paragraphe 4; colonne 2, paragraphe 4 * <br> ----- | 1,4-6, 10 | |

DOMAINES TECHNIQUES
RECHERCHES (Int. Cl.4)

A 23 L

Le présent rapport a été établi pour toutes les revendications

| Lieu de la recherche | Date d'achèvement de la recherche | Examinateur |
|---|---|---|
| LA HAYE | 17-06-1988 | SANTOS Y DIAZ A.I. |

EPO FORM 1503 03.82 (P0402)